# FASCICULE DE BREVET EUROPEEN

(11) **EP 4 352 350 B1**
(45) Date de publication et mention de la délivrance du brevet: **09.07.2025**
(21) Numéro de dépôt: 22732301.1
(22) Date de dépôt: 27.05.2022
(51) Int. Cl.: F02C 7/32

(54) **ENSEMBLE POUR TURBOMACHINE D'AERONEF COMPRENANT UN SUPPORT D'EQUIPEMENTS**
FLUGZEUGTURBINENTRIEBWERKANORDNUNG MIT EINER STÜTZE FÜR AUSRÜSTUNG
AIRCRAFT TURBINE ENGINE ASSEMBLY COMPRISING A SUPPORT FOR EQUIPMENT

(30) Priorité: 09.06.2021 FR 2106094
(43) Date de publication de la demande: 17.04.2024
(73) Titulaire: SAFRAN AIRCRAFT ENGINES, 75015 Paris (FR)
(72) Inventeur: ZSIGA, Zoltan, 77550 MOISSY-CRAMAYEL (FR); AVOYNE, Valentin Sébastien Simon, 77550 MOISSY-CRAMAYEL (FR); FOGLIA, Matthieu Bruno François, 77550 MOISSY-CRAMAYEL (FR)
(74) Mandataire: Cabinet Beau de Loménie
(86) Numéro de dépôt international: PCT/FR2022/051006
(87) Numéro de publication internationale: WO 2022/258903

(56) Documents cités:
- EP-A2- 2 565 422
- WO-A1-2015/067906
- DE-A1- 102011 112 254

## Description

### Domaine technique

Le présent exposé concerne le domaine général des turbomachines, en particulier des turbomachines aéronautiques. Le présent exposé concerne le montage d'un support d'équipements dans une telle turbomachine, et plus particulièrement un ensemble pour turbomachine d'aéronef comprenant un support d'équipements.

### Technique antérieure

Dans une turbomachine, utilisée par exemple pour la propulsion d'un aéronef tel qu'un avion ou un hélicoptère, les équipements et accessoires tels que les pompes pour la production de puissance hydraulique, l'alimentation en carburant et la lubrification, les générateurs électriques pour la production de puissance électrique, etc., sont regroupés sur un support d'équipements communément appelé boîtier ou relais d'accessoires, ou encore AGB pour *« Accessory GearBox ».* Un tel support porte généralement un ou plusieurs trains d'engrenages qui sont entraînés en rotation par un prélèvement de puissance sur un arbre de la turbomachine et sur lesquels viennent se coupler les différents accessoires.

Pour diverses raisons, le support d'équipements peut être prévu autour d'un compresseur de la turbomachine. Dans ces circonstances, il est alors naturel de fixer au moins partiellement le support d'équipements sur le carter du compresseur. Toutefois, cela peut conduire à un phénomène d'ovalisation du carter, ce qui grève les performances du compresseur. Face à ce problème, la demande de brevet FR 2 952 672 de la Demanderesse propose de suspendre le support d'équipements à la poutre (aussi appelée pylône) située au-dessus du carter du compresseur et par laquelle le turboréacteur est accroché à l'aile d'un avion, dans une configuration où la suspension du turboréacteur à cette poutre s'effectue au niveau d'un moyeu de carter intermédiaire du moteur. Bien qu'apportant satisfaction dans certains cas, une telle solution peut être difficile à mettre en œuvre, notamment lorsque le turboréacteur est accroché à l'aéronef par un autre système, ou encore lorsque le support d'équipements est situé sous le carter du compresseur et ne s'étend pas au-dessus de ce carter. En outre, cette solution nécessite quelques liaisons qui peuvent être complexes ou encombrantes.

Une solution alternative est connue de DE 10 2011 112254 A1.

### Exposé de l'invention

Le présent exposé vise à remédier au moins en partie à ces inconvénients.

A cet effet, le présent exposé concerne un ensemble pour turbomachine d'aéronef comprenant un moyeu de carter intermédiaire, un support d'équipements présentant une face amont située en aval du moyeu de carter intermédiaire, et une boîte de transfert entraînant un arbre de transmission de puissance configuré pour transmettre de la puissance mécanique, prélevée sur un arbre moteur de la turbomachine, à au moins un équipement amont monté sur la face amont du support d'équipements, l'équipement amont comprenant un élément structural fixant le support d'équipements au moyeu de carter intermédiaire.

On appelle axe de la turbomachine, un axe de rotation d'un rotor de la turbomachine, par exemple un rotor de compresseur. La direction axiale correspond à la direction de l'axe de la turbomachine et une direction radiale est une direction perpendiculaire à cet axe et coupant cet axe. De même, un plan axial est un plan contenant l'axe de la turbomachine et un plan radial est un plan perpendiculaire à cet axe. Une circonférence s'entend comme un cercle appartenant à un plan radial et dont le centre appartient à l'axe de la turbomachine. Une direction tangentielle ou circonférentielle est une direction tangente à une circonférence ; elle est perpendiculaire à l'axe de la turbomachine mais ne passe pas par l'axe.

Sauf précision contraire, les adjectifs intérieur et extérieur sont utilisés en référence à une direction radiale de sorte que la partie intérieure d'un élément est, suivant une direction radiale, plus proche de l'axe du diffuseur que la partie extérieure du même élément.

Enfin, sauf précision contraire, les termes amont et aval sont utilisés en référence à la direction globale d'écoulement dans une turbomachine, à savoir du compresseur vers la turbine.

Dans une turbomachine, le carter intermédiaire est situé en amont du carter de compresseur, le cas échéant en amont du carter de compresseur haute pression (et optionnellement en aval du carter de compresseur basse pression) lorsque la turbomachine comprend plusieurs compresseurs. Lorsque la turbomachine comprend une soufflante, le carter intermédiaire est situé en aval du carter de rétention de la soufflante, qui est disposé annulairement autour de la soufflante.

Le moyeu de carter intermédiaire désigne une partie radialement intérieure du carter intermédiaire. Dans une turbomachine à double flux, le moyeu de carter intermédiaire peut désigner la partie du carter intermédiaire qui sépare le flux primaire du flux secondaire. Le rôle du moyeu de carter intermédiaire est de permettre d'avoir une continuité de structure, entre le flux primaire et le flux secondaire, pour faire transiter les efforts vers les suspensions amonts de la turbomachine. De plus, le moyeu du carter intermédiaire peut servir à fixer les chapes des bielles de reprise de poussée, les sorties de décharge du compresseur basse pression en air et différents équipements tels que des vérins, des sondes, etc.

La boîte de transfert, communément appelée TGB (pour *« Transfer GearBox »*) entraîne en rotation l'arbre de transmission de puissance, également appelé arbre de transfert, configuré pour transmettre au support d'équipements de la puissance mécanique prélevée sur un arbre moteur, par exemple un arbre de corps haute pression ou basse pression de la turbomachine. La liaison cinématique entre l'arbre de transmission de puissance et l'arbre moteur peut s'effectuer via un engrenage et par l'intermédiaire d'un arbre, notamment un arbre radial. Ainsi, la puissance mécanique peut être transmise à au moins un équipement amont monté sur le support d'équipements afin d'entraîner en rotation une partie mobile de l'équipement, généralement par l'intermédiaire d'engrenages prévus entre l'arbre de transmission de puissance et l'équipement amont. La boîte de transfert est disposée dans le moyeu de carter intermédiaire, et est reliée au support d'équipements par l'intermédiaire de l'arbre de transmission de puissance.

L'ensemble pour turbomachine d'aéronef selon le présent exposé utilise astucieusement un ou plusieurs équipements amonts en y incluant un élément structural afin de fixer le support d'équipements au moyeu de carter intermédiaire, ce qui permet de s'affranchir d'une fixation du support d'équipements aussi bien sur un carter de compresseur que sur une poutre d'accroche à une aile d'avion. On comprend que l'équipement amont, comprenant l'élément structural permettant la fixation du support d'équipement au moyeu de carte intermédiaire, est un équipement ou accessoire proprement dit du support d'équipements, tel qu'une pompe ou un générateur électrique par exemple, entrainé en rotation par la boîte de transfert, et est donc distinct de ladite boîte de transfert.

Un élément structural est un élément configuré pour assurer un rôle de maintien de structure et de reprise d'efforts. En l'occurrence, l'élément structural peut permettre la fixation autonome du support d'équipements au moyeu de carter intermédiaire, même si, comme on le verra par la suite, d'autres éléments peuvent intervenir pour reprendre les efforts selon certains degrés de liberté.

Grâce au fait que l'équipement amont comprend un élément structural fixant le support d'équipements au moyeu de carter intermédiaire, le support d'équipements s'adapte à tout type de turbomachine d'aéronef sans nécessiter l'ajout d'une poutre, et les fixations du support d'équipements sont en outre simplifiées, ce qui dégage de la liberté de conception pour d'autres aspects de la turbomachine.

Dans certains modes de réalisation, l'équipement amont comprend une partie fonctionnelle, l'élément structural entourant au moins en partie la partie fonctionnelle.

On comprend par « partie fonctionnelle », la partie de l'équipement permettant de réaliser la fonction proprement dite, pour laquelle est prévu l'équipement. Pour une pompe par exemple, la partie fonctionnelle peut être la partie tournante, permettant d'effectuer le pompage. L'élément structural peut donc être une enveloppe, ou carter entourant au moins en partir la partie fonctionnelle en étant configuré pour supporter le support d'équipements et le fixer au moyeu de carter intermédiaire, et pour reprendre les efforts transitant entre le support d'équipements et le moyeu de carter intermédiaire. Il est ainsi possible de suspendre et fixer le support d'équipements au moyeu de carter intermédiaire par l'intermédiaire d'un (ou plusieurs) équipement(s) déjà existant, auquel est rajouté un élément structural permettant à l'équipement de réaliser ces fonctions de fixation et de reprise d'efforts.

Dans certains modes de réalisation, le au moins un équipement amont est l'un parmi un générateur électrique pour fournir de la puissance électrique à l'aéronef, un alternateur pour fournir du courant électrique à des équipements électriques de la turbomachine, un démarreur pour mettre en route la turbomachine, une pompe hydraulique pour fournir de la puissance hydraulique à l'aéronef, une pompe à carburant, ou une pompe de lubrification.

L'équipement amont peut être l'un de ces accessoires ou, lorsque l'ensemble comprend plusieurs équipements ayant chacun un élément structural, plusieurs de ces accessoires peuvent être présents en un ou plusieurs exemplaires. Chacun de ces équipements comprend une partie fonctionnelle permettant de fournir la puissance électrique, un courant électrique, une puissance hydraulique, une puissance pneumatique, un débit/une pression de carburant, etc., selon le cas de figure, et un élément structural permettant la fixation du support d'équipements au moyeu de carter intermédiaire. Par ailleurs, cette liste n'est pas limitative, d'autres équipements pouvant être envisagés, tel qu'un déshuileur, un compresseur, ou des équipements non tournants tels que des échangeurs.

Dans certains modes de réalisation, l'élément structural est fixé rigidement à la face amont et au moyeu de carter intermédiaire.

Le support d'équipements est de préférence formé par un boîtier qui comprend la face amont. Par « fixation rigide », on comprend que l'élément structural est fixé directement à la face amont et au moyeu de carter intermédiaire, sans degré de liberté. Par exemple, la fixation de l'élément structural au moyeu de carter intermédiaire peut être réalisée par un boulonnage. La fixation via l'élément structural est donc simple et robuste.

Dans certains modes de réalisation, l'élément structural est fixé rigidement à la face amont et au moyeu de carter intermédiaire par l'intermédiaire d'une liaison déformable.

Une liaison déformable peut être réalisée au moyen d'un boulonnage comprenant une pièce intermédiaire déformable, intercalée entre l'élément structural et le moyeu de carter intermédiaire, permettant notamment d'amortir les vibrations.

Dans certains modes de réalisation, l'élément structural est fixé rigidement à la face amont, l'ensemble comprenant en outre au moins un bras amont reliant l'élément structural de l'équipement amont au moyeu de carter intermédiaire, et dans lequel un fourreau rigide entoure l'arbre de transmission de puissance et fixe rigidement le support d'équipements au moyeu de carter intermédiaire.

Selon cette configuration, l'élément structural est fixé d'une part rigidement à la face amont, et d'autre part au moyeu de carter intermédiaire via un bras amont. Lorsque l'ensemble comprend plusieurs équipements ayant chacun un élément structural, chacun des éléments structuraux est relié au moyeu de carter intermédiaire par l'intermédiaire d'un bras. Par ailleurs, le support d'équipements est également fixé au moyeu de carter intermédiaire via le fourreau rigide entourant l'arbre de transmission, le fourreau rigide étant alors également un élément structural. Les bras permettent de reprendre principalement les moments suivant trois axes orthogonaux, ces moments pouvant devenir significatifs lorsque le support d'équipements est dimensionné pour porter au moins trois équipements, tandis que le fourreau rigide peut être configuré pour reprendre principalement les efforts suivant lesdits trois axes.

En outre, le fait de relier le bras amont à l'élément structural, et non directement à la face amont du support d'équipements, permet de limiter l'encombrement de l'ensemble. En effet, lorsque le support d'équipements comprend plusieurs équipements sur sa face amont, et qu'au moins certains équipements sur la face amont sont très proches les uns des autres, il reste peu de place pour fixer un bras entre ces équipements. La présence d'éléments structuraux, sur lesquels peuvent se fixer un bras amont, permet donc de limiter l'encombrement de l'ensemble.

Dans certains modes de réalisation, l'élément structural est fixé rigidement à la face amont, l'ensemble comprenant en outre au moins six bras amonts reliant le support d'équipements au moyeu de carter intermédiaire, au moins l'un des six bras amonts reliant l'élément structural de l'équipement amont au moyeu de carter intermédiaire.

La présence de six bras amonts permet de reprendre les six degrés de liberté du support d'équipements, sans nécessité la présence d'un fourreau rigide entourant l'arbre de transmission de puissance et fixant rigidement le support d'équipements au moyeu de carter intermédiaire. De préférence, chaque bras amont comprend une rotule à chacune de ses extrémités. De préférence encore, chaque bras amont est relié à un élément structural. Cette configuration est rendue possible par la présence du ou des élément(s) structuraux, permettant de fixer les bras amonts sur les éléments structuraux et non sur la face amont du support d'équipements, cette face amont pouvant être encombrée par la présence des équipements. De manière alternative, au moins un (ou davantage) des six bras amonts peut être relié à un élément structural, les autres bras amonts étant reliés à la face amont, selon l'encombrement et la place disponible.

Dans certains modes de réalisation, l'élément structural est fixé rigidement à la face amont, l'ensemble comprenant en outre au moins un bras amont reliant l'élément structural de l'équipement amont au moyeu de carter intermédiaire, au moins un équipement aval monté sur une face aval du support d'équipements, et au moins un bras aval configuré pour relier l'équipement aval à un carter de la turbomachine disposé en aval du support d'équipements.

Selon cette configuration, l'élément structural est également fixé d'une part rigidement à la face amont, et d'autre part au moyeu de carter intermédiaire via un bras amont. Toutefois, compte tenu de la présence du ou des bras aval(s), la fixation de la boîte de transfert au support d'équipements peut être rigide (via le fourreau rigide précité) notamment pour servir de centrage au niveau du carter intermédiaire, ou souple, via une liaison rotule par coulisseau par exemple. On notera que les équipements avals comportent de préférence un élément structural auquel est relié le bras aval. Ce dernier est également relié à un carter de la turbomachine disposé en aval du support d'équipements, de préférence en aval de la chambre de combustion, par exemple au carter de turbine basse pression. On comprend également que les équipements avals peuvent être l'un des équipements énumérés précédemment en référence aux équipements amonts, et sont également entraînés en rotation par la boîte de transfert.

Dans certains modes de réalisation, le au moins un bras amont est fixé au moyeu de carter intermédiaire et/ou à l'élément structural de l'équipement amont de manière articulée.

Plus particulièrement, dans certains modes de réalisation, le au moins un bras est fixé au moyeu de carter intermédiaire et/ou à l'élément structural de manière articulée de façon à reprendre les efforts uniquement dans l'axe des bras (en traction et/ou compression). Une articulation peut comprendre deux pièces mécaniquement en mouvement l'une par rapport à l'autre, auquel cas le bras peut être une bielle ou biellette, par exemple une bielle rotulée, et/ou comprendre une partie élastiquement déformable de façon à permettre un certain mouvement du bras, qui peut alors être une simple poutre, par rapport au moyeu de carter intermédiaire et/ou à l'élément structural. Grâce à ces moyens, la fixation du support d'équipements peut être isostatique et ne nécessite pas de réglage lors de son montage. Les suspensions peuvent également être équipées de plot souple pour amortir les sollicitations vibratoires.

Dans certains modes de réalisation, le au moins un bras aval est fixé au carter de la turbomachine disposé en aval du support d'équipements et/ou à l'élément structural de l'équipement aval de manière articulée de façon à reprendre les efforts uniquement en traction.

Dans certains modes de réalisation, la fixation du support d'équipements au moyeu de carter intermédiaire est isostatique. Par conséquent, le dimensionnement de l'ensemble est facilité et la fixation ne nécessite aucun réglage lors de son montage.

Dans certains modes de réalisation, le support d'équipements est fixé au moyeu de carter intermédiaire de façon à se trouver, en position d'utilisation, en majorité en-dessous d'un axe du moyeu de carter intermédiaire.

La position d'utilisation est une position dans laquelle l'ensemble pour turbomachine est intégré dans une turbomachine elle-même assemblée à un aéronef. Dans cette position, au moins 50% du volume du support d'équipements se trouve en-dessous de l'axe du moyeu de carter intermédiaire. De telles situations se rencontrent lorsque le support d'équipements est dit « monté à six heures » (6h), par exemple, en se référant à une horloge imaginaire dont l'axe 12h-6h est aligné avec la verticale, 12h étant en haut et 6h en bas. Le support d'équipements peut aussi être monté par exemple à 5h, à 7h, etc. Le point de référence peut être un centre de gravité du support d'équipements, éventuellement pourvu de ses équipements et accessoires.

Dans certains modes de réalisation, l'ensemble comprend au moins deux équipements amonts, les au moins deux équipements amonts comprenant chacun un élément structural et étant disposé chacun à deux extrémités opposées du support d'équipements.

Autrement dit, les équipements amont sont disposés de part et d'autre de l'arbre de transmission de puissance, à deux extrémités opposées du support d'équipements. Cela permet de répartir la reprise d'efforts entre les éléments structuraux. On comprend par « extrémités », les extrémités du support d'équipements selon une direction transversale, perpendiculaire à l'axe de la turbine. Par ailleurs, contrairement au cas de figure comprenant un unique équipement amont équipé d'un élément structural, nécessitant une structure renforcée et donc plus lourde pour reprendre les efforts, la présence de deux équipements amonts comprenant un élément structural permet de mieux répartir ces efforts, tout en limitant la masse de l'ensemble.

Dans certains modes de réalisation, l'élément structural d'un premier équipement amont est fixé rigidement à la face amont et au moyeu de carter intermédiaire, et l'élément structural d'un deuxième équipement amont est fixé rigidement à la face amont et au moyeu de carter intermédiaire par l'intermédiaire d'un bras amont.

Dans certains modes de réalisation, le support d'équipements s'étend selon une portion d'anneau. Le support d'équipements peut donc être prévu aussi près que possible de l'axe principal, autour du compartiment moteur, de façon à conserver une turbomachine compacte. La portion d'anneau peut être un arc de cercle, centré ou non sur l'axe de la turbomachine.

Dans certains modes de réalisation, le moyeu de carter intermédiaire comprend un flasque annulaire aval auquel est fixé l'élément structural, et la boîte de transfert comprend un renvoi d'angle disposé dans le moyeu de carter intermédiaire en amont du flasque annulaire aval, ledit renvoi d'angle reliant l'arbre de transmission de puissance à l'arbre moteur de la turbomachine par l'intermédiaire d'un arbre radial de la turbomachine. Le renvoi d'angle peut permettre la transmission de puissance mécanique entre l'arbre radial et l'arbre de transmission de puissance. Le flasque annulaire aval peut être le même que celui mentionné précédemment.

Dans certains modes de réalisation, la portion d'anneau couvre un secteur angulaire inférieur à 180°.

Le présent exposé concerne également une turbomachine d'aéronef comprenant un ensemble selon l'un quelconque des modes de réalisation précédemment définis. L'aéronef peut être, en particulier, un avion ou un hélicoptère. La turbomachine peut être un turboréacteur, un turbopropulseur, une unité de puissance auxiliaire (communément appelée APU pour *« Auxiliary Power Unit »*), etc.

Dans certains modes de réalisation, la turbomachine d'aéronef comprend, en aval du carter intermédiaire, un carter de compresseur et un carter de chambre de combustion, et l'ensemble décrit précédemment est dépourvu de fixation entre le support d'équipements et le carter de compresseur, et dépourvu de fixation entre le support d'équipements et le carter de chambre de combustion. Les performances de la turbomachine sont donc préservées.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une coupe schématique d'une turbomachine d'aéronef comprenant un ensemble selon un premier mode de réalisation.
[Fig. 2] La figure 2 est une vue de dessous, en perspective, d'une partie de la turbomachine d'aéronef selon le premier mode de réalisation.
[Fig. 3] La figure 3 est une vue de côté, en position d'utilisation, de la partie de la turbomachine de la figure 2,
[Fig. 4] La figure 4 est une vue de dessous, en perspective, d'une partie de la turbomachine d'aéronef selon un deuxième mode de réalisation.
[Fig. 5] La figure 5 est une vue de côté, en position d'utilisation, de la partie de la turbomachine de la figure 4.
[Fig. 6] La figure 6 est une vue de dessous, en perspective, d'une partie de la turbomachine d'aéronef selon un troisième mode de réalisation.
[Fig. 7] La figure 7 est une vue de côté, en position d'utilisation, de la partie de la turbomachine de la figure 6.

### Description détaillée

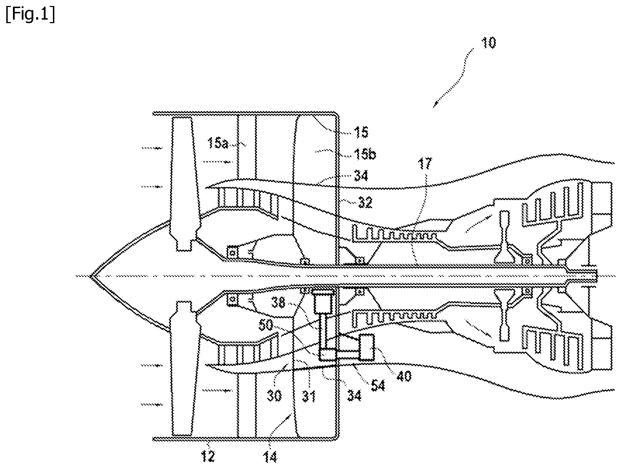

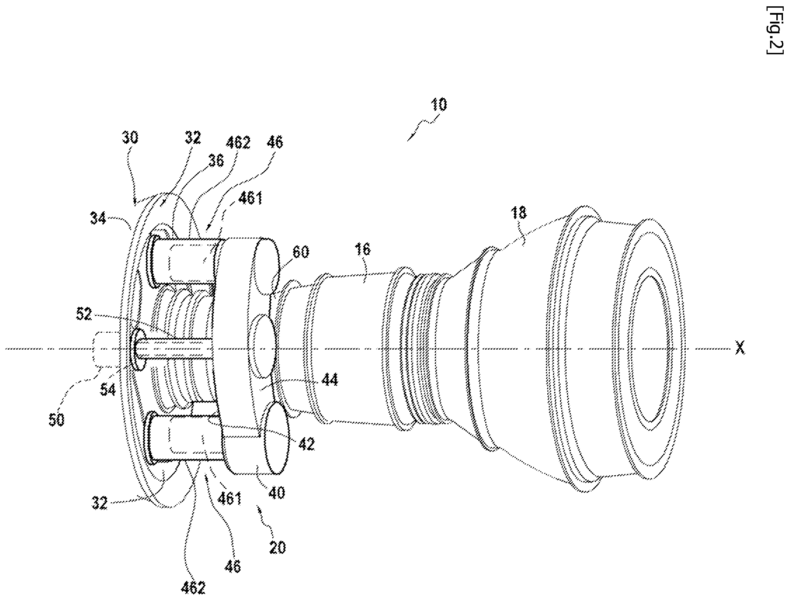

La figure 1 représente en coupe, de manière simplifiée, une turbomachine 10 selon un mode de réalisation. Les figures 2 à 7 représentent une partie de la turbomachine 10 en perspective, en vue de dessous ou de côté. La turbomachine 10 est en l'espèce un turboréacteur à double corps et double flux, mais le présent exposé s'étend à d'autres types de turbomachines, comme mentionné précédemment. La turbomachine 10, ou une turbomachine d'un autre type, peut être montée sous l'aile d'un aéronef, sur l'aile ou encore à l'arrière du fuselage de l'aéronef.

La turbomachine 10 s'étend généralement selon un axe principal X formant axe de rotation d'au moins une partie de ses rotors. La turbomachine 10 peut comprendre, de l'amont vers l'aval, un carter de rétention de soufflante 12, un carter intermédiaire 14, un carter de compresseur 60, un carter de chambre de combustion 16 et un carter de turbine 18. Le cas échéant, certains de ces carters peuvent être divisés en plusieurs sections ; par exemple, le carter de turbine 18 peut comprendre un carter de turbine haute pression, un carter inter-turbines et un carter de turbine basse pression.

Les différents carters peuvent être annulaires, voire axisymétriques, et centrés sur l'axe X.

Le carter intermédiaire 14 comprend une virole externe 15 et un moyeu de carter intermédiaire 30. Le moyeu de carter intermédiaire 30 peut être relié à la virole externe 15 par des redresseurs 15a (communément appelées OGV pour *« Outlet Guide Vanes »*) pour redresser le flux secondaire issu de la soufflante, ainsi que par des bras structuraux 15b.

Le moyeu de carter intermédiaire 30 peut former une séparation entre une veine dite primaire, configurée pour guider le flux primaire passant par le cœur de la turbomachine et destiné à participer à la combustion et à l'entraînement d'au moins une turbine, et une veine dite secondaire, configurée pour guider le flux secondaire passant par les OGV 15a pour générer l'essentiel de la poussée de la turbomachine 10.

En l'espèce, le moyeu de carter intermédiaire 30 comprend un flasque annulaire aval 32 s'étendant radialement vers l'intérieur à partir d'une partie aval d'une portion tronconique 34. La portion tronconique 34 peut être, au moins dans sa partie aval, sensiblement concentrique avec la virole externe 15 et, au cas particulier, axisymétrique autour de l'axe principal X.

Le moyeu de carter intermédiaire 30 peut en outre comprendre, ici dans le flasque aval 32, une ou plusieurs ouvertures 36 pour le passage de sorties de décharge du compresseur, notamment compresseur basse pression. Ces sorties sont communément appelées sorties VBV (pour *« Variable Bleed Valve »*)*.* En l'espèce, les ouvertures 36 sont ovales. Les ouvertures 36 peuvent être disposées les unes à côté des autres le long d'une circonférence.

Le moyeu de carter intermédiaire 30 peut être en métal, par exemple en titane, en acier, en aluminium, ou en alliage métallique comprenant un ou plusieurs de ces métaux.

Le moyeu de carter intermédiaire 30 peut comprendre également un flasque amont 31. En l'espèce, le flasque amont 31, annulaire, s'étend radialement vers l'intérieur à partir d'une partie amont de la portion tronconique 34. Entre le flasque amont 31 et le flasque aval 32 se trouvent une ou plusieurs structures creuses, s'étendant par exemple dans la continuité de bras qui traversent la veine primaire, et optionnellement dans la continuité des bras structuraux 15b, comme illustré. Ces structures creuses permettent le passage de servitudes, telles que les circuits de lubrification, des moyens de mesure de la vitesse, etc., mais aussi d'un arbre radial 38 dont le rôle sera décrit par la suite.

Au sein de la turbomachine 10, un ensemble pour turbomachine d'aéronef 20 comprend le moyeu de carter intermédiaire 30 précité, mais aussi un support d'équipements 40.

Les figures 2 à 7 montrent que le support d'équipements 40 s'étend selon une portion d'anneau, ici autour de l'axe principal X. Dans ce mode de réalisation, la portion d'anneau couvre un secteur angulaire de préférence inférieur à 180°, en l'espèce inférieur à 120°.

Le support d'équipements 40 peut être formé par un boîtier qui présente une face amont 42, tournée vers le moyeu de carter intermédiaire 30, et une face opposée dite face aval 44, tournée vers l'aval de la turbomachine, par exemple vers le carter de turbine 18. La face amont 42 et/ou la face aval 44 peuvent être sensiblement planes, et/ou s'étendre transversalement à l'axe principal X, comme illustré.

On note d'emblée que la face amont 42 est en aval du moyeu de carter intermédiaire 30, grâce aux dispositions qui seront détaillées ci-après.

Par ailleurs, l'ensemble pour turbomachine d'aéronef 20 comprend une boîte de transfert 50 fixée rigidement sur le moyeu de carter intermédiaire 30, de préférence en amont du flasque aval 32, par exemple via une liaison boulonnée. De manière alternative, la boîte de transfert 50 peut être formée d'une seule pièce avec le moyeu de carter intermédiaire 30, en étant intégrée à celui-ci lors de sa fabrication par fonderie. Un arbre de transmission de puissance 54 relie la boîte de transfert 50 au support d'équipements 40, et est configuré pour transmettre de la puissance mécanique, prélevée sur un arbre moteur 17 de la turbomachine, à au moins un équipement monté sur le support d'équipements, le cas échéant via un ou plusieurs trains d'engrenages.

L'arbre de transmission de puissance 54 peut prélever de la puissance mécanique sur l'arbre moteur 17 par un arbre intermédiaire appelé arbre radial 38, en raison de son positionnement généralement selon une direction radiale de la turbomachine 10. Le cas échéant, la boîte de transfert 50 peut comprendre un renvoi d'angle formant une liaison cinématique entre l'arbre radial 38 et l'arbre de transmission de puissance 54. Par exemple, le renvoi d'angle peut comprendre une transmission formée par un accouplement de pignons coniques. Comme illustré sur la figure 1, le renvoi d'angle peut être situé entre le flasque amont 31 et le flasque aval 32 du moyeu de carter intermédiaire 30, ou encore disposé sur le flasque aval 32.

Un élément de liaison 52 s'étendant entre la boîte de transfert 50 et le support d'équipements 40 est disposé autour de l'arbre de transmission 54 et protège ce dernier. Selon un premier mode de réalisation conforme à l'invention, l'élément de liaison 52 est une liaison souple non structurale permettant de relier la boîte de transfert 50 au support d'équipements 40, et comprenant par exemple une liaison rotulante par coulisseau (non représentée).

Par ailleurs, comme indiqué précédemment, le support d'équipements 40 peut renfermer les trains d'engrenages mentionnés précédemment (non représentés) qui sont entraînés en rotation par un prélèvement de puissance sur un arbre moteur 17 (par exemple l'arbre de corps haute pression) de la turbomachine 10. Un ou plusieurs équipements peuvent être montés sur le support d'équipements 40 et peuvent présenter chacun un arbre d'entraînement qui est couplé à l'un des engrenages du support d'équipements 40. Ces arbres d'entraînement, non représentés sur les figures, peuvent s'étendre selon une direction sensiblement parallèle à l'axe principal X. Parmi ces équipements, il est possible de prévoir un ou plusieurs éléments parmi les suivants, en un ou plusieurs exemplaires : un générateur électrique pour fournir de la puissance électrique à l'aéronef, un alternateur pour fournir du courant électrique à des équipements électriques de la turbomachine, un démarreur pour mettre en route la turbomachine, une pompe hydraulique pour fournir de la puissance hydraulique à l'aéronef, une pompe à carburant, et une pompe de lubrification. Bien entendu, d'autres équipements que ceux mentionnés ci-dessus, par exemple un déshuileur, peuvent être montés sur le support d'équipements 40, en particulier des équipements nécessitant un entraînement mécanique et donc une prise de mouvement sur le support d'équipements pour fonctionner.

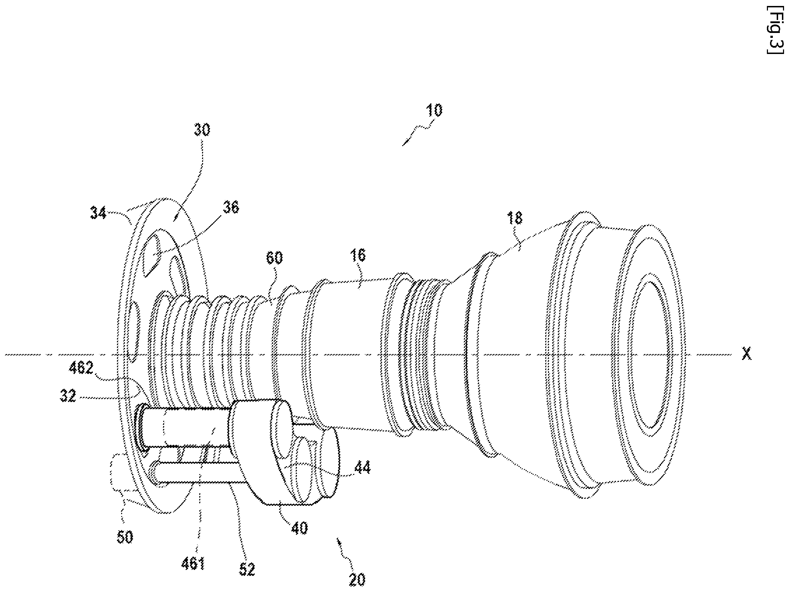

Dans l'exemple illustré sur les figures 2 et 3 en référence au premier mode de réalisation, on a représenté deux équipements amont 46, montés sur la face amont 42 du support d'équipements 40. Toutefois, d'autres équipements pourraient être montés sur la face amont 42, et également sur la face aval 44.

Ces équipements amonts 46 sont disposés respectivement aux extrémités du support d'équipements 40, et comprennent chacun une partie fonctionnelle 461 et un élément structural 462. En l'espèce, l'élément structural 462 forme également le carter de l'équipement 46, entourant la partie fonctionnelle 461 de l'équipement 46, ainsi que le montrent les figures 2 et 3. La forme du carter conventionnel peut être modifiée de manière à pouvoir être fixé plus facilement à la fois sur la face amont 42 du support d'équipements 40 et sur le moyeu de carter intermédiaire 30. On notera qu'un élément structural 462 destiné à être fixé sur le moyeu de carter intermédiaire 30 est de préférence rajouté sur le ou les équipements 46 ayant les parties fonctionnelles 461 présentant les longueurs axiales les plus importantes. La distance entre la face amont 42 et le moyeu de carter intermédiaire 30 est ainsi déterminée en particulier par la longueur axiale de ces parties fonctionnelles 461, étant par ailleurs entendu qu'il peut y avoir une distance minimale à respecter pour que la face amont 42 n'interfère pas avec des éléments fixés au moyeu de carter intermédiaire, tels que par exemple des conduits des sorties de décharge du compresseur.

Ainsi, dans ce mode de réalisation, les éléments structuraux 462 sont renforcés de manière à être capable de soutenir la charge totale du support d'équipements 40 et des éléments qu'il comporte, et de maintenir le support d'équipements 40 fixé rigidement au moyeu de carter intermédiaire 30.

Les éléments structuraux 462 sont formés principalement par une paroi qui peut être cylindrique, à section circulaire, elliptique, ellipsoïdale, carrée, rectangulaire, polygonale ou autre. Si nécessaire, les éléments structuraux 462 peuvent comprendre des renforts longitudinaux et/ou circonférentiels pour lui donner la raideur souhaitée. Les renforts peuvent être prévus sur l'intérieur ou, de préférence, sur l'extérieur de la paroi des éléments structuraux 462. Ces derniers peuvent être métalliques, par exemple en acier, titane, aluminium ou alliages comprenant au moins un de ces métaux, ou bien en composite à matrice métallique ou composite à matrice organique. Ils peuvent également intégrer des canalisations (« core passages ») ou des platines d'interface pour assurer la circulation des fluides (huile, carburant, Skydrol^{®}) ou de l'air dans la zone du support d'équipements 40.

Comme mentionné précédemment, les éléments structuraux 462 sont disposés préférentiellement aux extrémités du support d'équipements 40 et de part et d'autre de la boîte de transfert 50, correspondant à la position des équipements 46, de manière à répartir la reprise d'efforts entre les deux éléments structuraux 462 et à équilibrer le poids et les charges du support d'équipements 40.

Les éléments structuraux 462 peuvent être montés sur la face amont 42 du support d'équipement 40 et sur le moyeu de carter intermédiaire 30 par boulonnage, par exemple via une bride boulonnée, un collier de type V-Band ou tout autre mode de fixation envisageable par l'homme du métier, de préférence démontable, qui soit suffisamment robuste pour permettre la fixation rigide du support d'équipements 40 au moyeu de carter intermédiaire 30.

Grâce à ces dispositions, le support d'équipements 40, bien que fixé sur le moyeu de carter intermédiaire 30, peut être positionné en aval du moyeu de carter intermédiaire 30. Ainsi, dans le présent mode de réalisation, le support d'équipements 40 peut être positionné axialement au niveau du carter de compresseur 60, plus particulièrement au niveau du carter de compresseur haute pression, sans toutefois être fixé sur ce carter de compresseur 60. Ainsi, les phénomènes de distors sont évités.

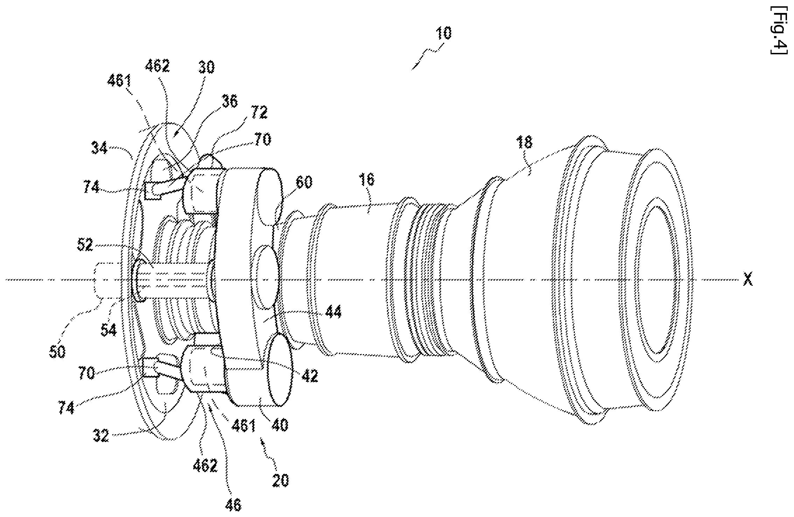

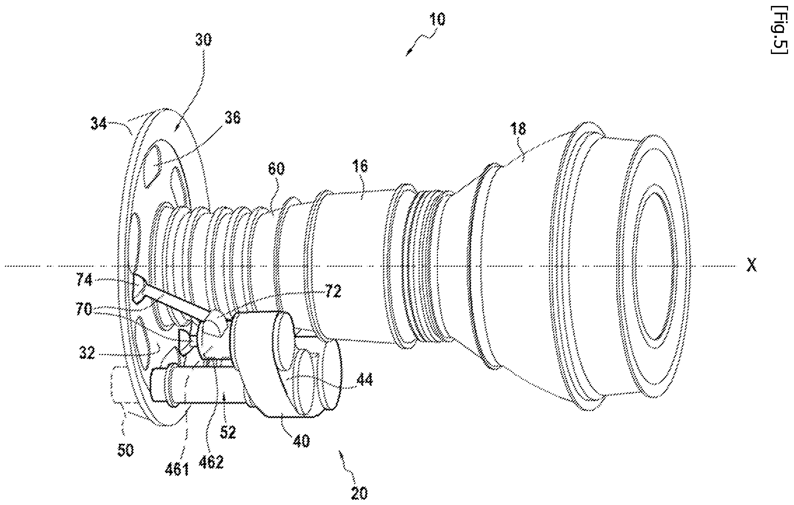

Selon un deuxième mode de réalisation conforme à l'invention et représenté sur les figures 4 et 5, l'ensemble pour turbomachine d'aéronef 20 peut comprendre au moins un bras amont 70, voire au moins deux bras amonts 70, en l'espèce exactement deux bras amonts 70, c'est-à-dire un bras pour chaque équipement amont 46. Sauf mention contraire, on décrira par la suite un des bras amonts 70, l'autre pouvant être identique ou présenter d'autres caractéristiques, notamment parmi celles mentionnées.

Le bras amont 70 relie l'équipement 46, plus précisément l'élément structural 462, au moyeu de carter intermédiaire 30, afin d'assurer une reprise d'efforts, par exemple des efforts axiaux, par exemple en traction. Dans ce cas de figure, l'élément structural 462 est plus court, dans la direction axiale X, que l'élément structural décrit en référence aux figures 2 et 3 pour le premier mode de réalisation. Ainsi, l'élément structural 462 s'étend vers l'amont en direction du moyeu de carter intermédiaire 30 mais n'est pas fixé directement à celui-ci. L'élément structural 462 est fixé au moyeu de carter intermédiaire 30 par l'intermédiaire du bras amont 70.

Plus précisément, le bras amont 70 est fixé à l'élément structural 462 par une première liaison 72 et au moyeu de carter intermédiaire 30 par une deuxième liaison 74. L'une et/ou l'autre de la première liaison 72 et de la deuxième liaison 74 peut être articulée, de sorte que les efforts soient repris uniquement dans l'axe des bras (en traction et/ou compression).

Par exemple, la première liaison 72 peut être une liaison rotule.

Par exemple, la deuxième liaison 74 peut comprendre un plot souple, par exemple comprenant une succession de couches métalliques et de couches d'élastomère.

Ces liaisons peuvent être interverties, ou rendues identiques l'une à l'autre, ou encore d'autres liaisons peuvent être utilisées, par exemple des liaisons boulonnées, notamment associées à des moyens de réglage du montage des bras pour compenser le caractère hyperstatique de la liaison.

Comme illustré sur les figures 4 et 5, la liaison 72 peut être prévue sur une surface périphérique de l'élément structural 462, ou plus généralement sur une surface distincte de la face amont de l'élément structural 462, mais peut également être prévue sur la face amont de l'élément structural 462.

Entre les liaisons, le bras amont 70 peut être une barre ou une bielle, typiquement métallique ou en composite. La section d'une telle barre ou bielle peut être dimensionnée par l'homme du métier, par exemple avec une section en forme de H ou une section creuse, notamment de forme circulaire, ellipsoïdale, carrée, rectangulaire ou polygonale.

Par ailleurs, selon ce deuxième mode de réalisation, l'élément de liaison 52 de la boîte de transfert 50 n'est pas une liaison souple contrairement au premier mode de réalisation, mais est une liaison structurale, autrement dit une liaison rigide fixant rigidement le support d'équipements 40 sur le moyeu de carter intermédiaire 30. En l'espèce, l'élément de liaison 52 est formé par un fourreau (ci-après également désigné comme « fourreau 52 »), ledit fourreau 52 entourant l'arbre de transmission de puissance 54.

Ainsi, dans ce mode de réalisation, le fourreau 52 de la boîte de transfert 50 est également renforcé de manière à être capable de soutenir les charges du support d'équipements 40, et de maintenir le support d'équipements 40 fixé rigidement au moyeu de carter intermédiaire 30.

Le fourreau 52 peut présenter des caractéristiques similaires (liées à sa forme et son matériau) aux éléments structuraux 462 décrits en référence au premier mode de réalisation. Le fourreau 52 peut être fixé à une partie circonférentiellement centrale du support d'équipements 40, et peut être lié au support d'équipements 40 et au moyeu de carter intermédiaire 30 par boulonnage.

Comme illustré, l'ensemble pour turbomachine d'aéronef 20 selon ce mode de réalisation est dépourvu d'autre fixation entre le support d'équipements 40 et le moyeu de carter intermédiaire 30 que le fourreau 52 et les deux bras amonts 70 précédemment décrits. Grâce à un tel montage, la fixation du support d'équipements 40 au moyeu de carter intermédiaire 30 est isostatique. D'autres montages isostatiques peuvent toutefois être envisagés. Il est en particulier possible d'envisager, pour l'élément de liaison 52, une liaison souple non structurale de manière analogue au premier mode de réalisation, et non une liaison structurale, en augmentant le nombre de bras amonts 70 afin de bloquer les six degrés de liberté du support d'équipements 40. Par ailleurs, l'agencement illustré aux figures 4 et 5 n'est pas limitatif. Au moins un premier bras amont 70 pourrait relier un élément structural 462 au moyeu de carter intermédiaire 30, et au moins un deuxième bras amont 70 pourrait être relié directement la face amont 42 du support d'équipements 40, en fonction de l'encombrement et de l'agencement des équipements sur la face amont 42.

Par ailleurs, comme il ressort des figures 4 et 5, les liaisons 74 peuvent être prévues entre des ouvertures 36 successives, de sorte que les bras amonts 70 ne gênent pas les sorties de décharge du compresseur.

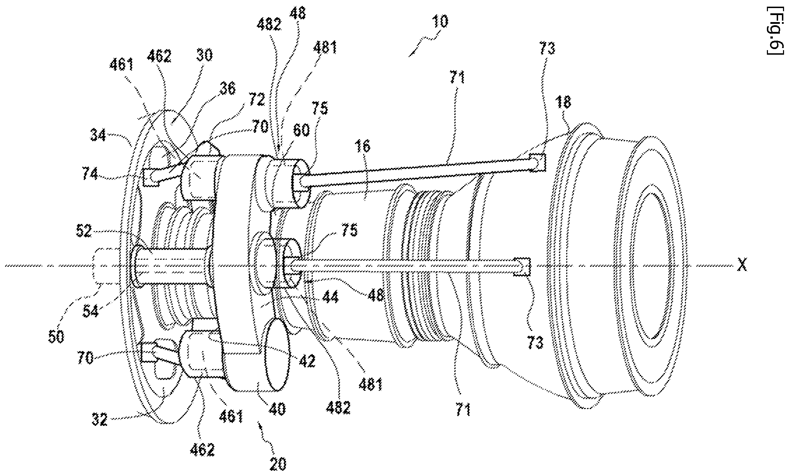

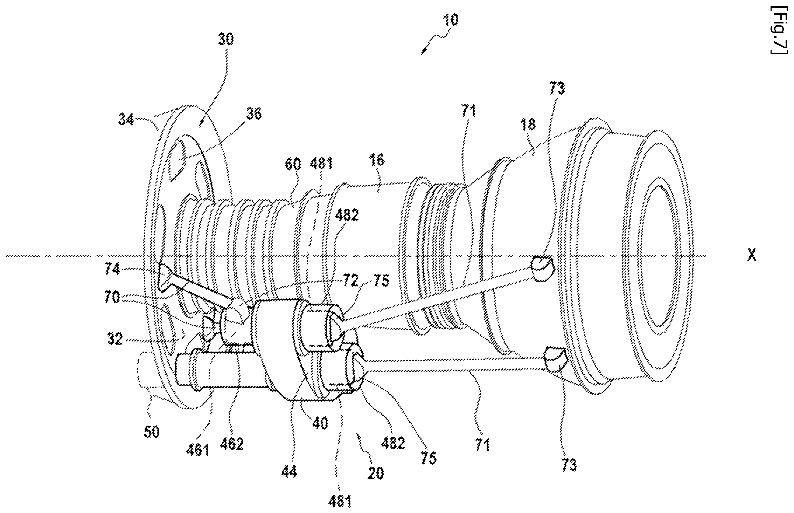

Un troisième mode de réalisation conforme à l'invention est représenté sur les figures 6 et 7. Ce mode de réalisation est similaire au deuxième mode de réalisation sur le côté amont du support d'équipements 40, en ce que l'ensemble pour turbomachine d'aéronef 20 comprend également deux bras amonts 70 agencé de la même façon que dans le deuxième mode de réalisation.

Dans le troisième mode de réalisation, l'ensemble pour turbomachine d'aéronef 20 comprend en outre deux équipements avals 48, disposés sur la face aval 44 du support d'équipements 40. De manière analogue aux équipements amonts 46, chaque équipement aval comprend une partie fonctionnelle 481 et un élément structural 482. Un premier équipement aval 48 est disposé à une extrémité du support d'équipements 40, et un deuxième équipement aval 48 est disposé sur une portion centrale du support d'équipements 40, selon la direction circonférentielle. Ces positions ne sont cependant pas limitatives, les équipements avals 48 pouvant être disposés différemment sur la face aval 44.

En outre, l'ensemble comprend deux bras avals 71 reliant chacun l'équipement aval 48, plus précisément l'élément structural 482, à un carter disposé en aval du carter de la chambre de combustion 16, en l'espèce au carter de turbine 18. De manière analogue aux bras amonts 70, les bras avals 71 permettent d'assurer une reprise d'efforts, par exemple des efforts axiaux, par exemple en traction.

Par ailleurs, de manière analogue aux bras amonts 70, chaque bras aval 71 est fixé à l'élément structural 482 par une première liaison 75 et au carter de turbine 18 par une deuxième liaison 73. L'une et/ou l'autre de la première liaison 75 et de la deuxième liaison 73 peut être articulée, de sorte que les efforts soient repris uniquement dans l'axe des bras (en traction et/ou compression), et peut être une liaison rotule ou comprendre un plot souple, par exemple comprenant une succession de couches métalliques et de couches d'élastomère précontraint.

De plus, selon le troisième mode de réalisation, l'élément de liaison 52 de la boîte de transfert 50 peut être un fourreau rigide similaire au fourreau décrit dans le deuxième de réalisation et représenté sur les figures 6 et 7, mais peut également être une liaison souple telle que celle décrite en référence au premier mode de réalisation par exemple. Cette deuxième configuration est rendue possible par la présence des bras avals 71.

De manière générale, les figures 3, 5 et 7 qui montrent la turbomachine 10 en position d'utilisation, illustrent que le support d'équipements 40 est fixé sur le moyeu de carter intermédiaire 30 de façon à se trouver en majorité en-dessous de l'axe principal X du moyeu de carter intermédiaire 30. En l'espèce, le support d'équipements 40 est monté à 6h, ce en quoi il est suspendu au moyeu de carter intermédiaire 30. Cette position, qui facilite la maintenance sous aile et la récupération des fluides en fonctionnement et à l'arrêt du moteur, et minimise le risque de feu car les éventuelles fuites sont évacuées par gravité, le cas échéant via la nacelle, rend d'autant plus avantageux le fait de ne pas fixer le support d'équipements 40 sur le carter de compresseur 60.

Bien que la présente description se réfère à des exemples de réalisation spécifiques, des modifications peuvent être apportées à ces exemples sans sortir de la portée générale de l'invention telle que définie par les revendications. En outre, des caractéristiques individuelles des différents modes de réalisation illustrés ou mentionnés peuvent être combinées dans des modes de réalisation additionnels. Par exemple, dans une configuration combinant le premier et le deuxième mode de réalisation, dans laquelle deux équipements amonts sont équipés chacun d'un élément structural 462, un des deux éléments structuraux 462 pourrait être fixé de manière rigide par boulonnage au moyeu de carter intermédiaire 30, le deuxième élément structural 462 étant relié au moyeu de carter intermédiaire par l'intermédiaire d'un bras amont 70. Par conséquent, la description et les dessins doivent être considérés dans un sens illustratif plutôt que restrictif.

## Revendications

1. Ensemble pour turbomachine d'aéronef (20), comprenant un moyeu de carter intermédiaire (30), un support d'équipements (40) présentant une face amont (42) située en aval du moyeu de carter intermédiaire (30), et une boîte de transfert (50) entraînant un arbre de transmission de puissance (54) configuré pour transmettre de la puissance mécanique, prélevée sur un arbre moteur (17) de la turbomachine, à au moins un équipement amont (46) monté sur la face amont (42) du support d'équipements (40), **caractérisé en ce que** l'équipement amont (46) comprend un élément structural (462) fixant le support d'équipements (40) au moyeu de carter intermédiaire (30).

2. Ensemble pour turbomachine d'aéronef selon la revendication 1, dans lequel l'équipement amont (46) comprend une partie fonctionnelle (461), l'élément structural (462) entourant au moins en partie la partie fonctionnelle.

3. Ensemble pour turbomachine d'aéronef selon la revendication 1 ou 2, dans lequel le au moins un équipement amont (46) est l'un parmi un générateur électrique pour fournir de la puissance électrique à l'aéronef, un alternateur pour fournir du courant électrique à des équipements électriques de la turbomachine, un démarreur pour mettre en route la turbomachine, une pompe hydraulique pour fournir de la puissance hydraulique à l'aéronef, une pompe à carburant, ou une pompe de lubrification.

4. Ensemble pour turbomachine d'aéronef selon l'une quelconque des revendications 1 à 3, dans lequel l'élément structural (462) est fixé rigidement à la face amont (42) et au moyeu de carter intermédiaire (30).

5. Ensemble pour turbomachine d'aéronef selon l'une quelconque des revendications 1 à 3, dans lequel l'élément structural (462) est fixé rigidement à la face amont (42), l'ensemble comprenant en outre au moins un bras amont (70) reliant l'élément structural (462) de l'équipement amont (46) au moyeu de carter intermédiaire (30), et dans lequel un fourreau rigide (52) entoure l'arbre de transmission de puissance (54) et fixe rigidement le support d'équipements au moyeu de carter intermédiaire.

6. Ensemble pour turbomachine d'aéronef selon l'une quelconque des revendications 1 à 3, dans lequel l'élément structural (462) est fixé rigidement à la face amont (42), l'ensemble comprenant en outre au moins un bras amont (70) reliant l'élément structural (462) de l'équipement amont (46) au moyeu de carter intermédiaire (30), au moins un équipement aval (48) monté sur une face aval (44) du support d'équipements (40), et au moins un bras aval (71) configuré pour relier l'équipement aval (48) à un carter (18) de la turbomachine disposé en aval du support d'équipements (40).

7. Ensemble pour turbomachine d'aéronef selon la revendication 5 ou 6, dans lequel le au moins un bras amont (70) est fixé au moyeu de carter intermédiaire (30) et/ou à l'élément structural (462) de l'équipement amont (46) de manière articulée.

8. Ensemble pour turbomachine d'aéronef selon l'une quelconque des revendications 1 à 7, dans lequel la fixation du support d'équipements (40) au moyeu de carter intermédiaire (30) est isostatique.

9. Ensemble pour turbomachine d'aéronef selon l'une quelconque des revendications 1 à 8, dans lequel le support d'équipements (40) est fixé au moyeu de carter intermédiaire (30) de façon à se trouver, en position d'utilisation, en majorité en-dessous d'un axe (X) du moyeu de carter intermédiaire (30).

10. Ensemble pour turbomachine d'aéronef selon l'une quelconque des revendications 1 à 9, comprenant au moins deux équipements amonts (46), les au moins deux équipements amonts (46) comprenant chacun un élément structural (462) et étant disposé chacun à deux extrémités opposées du support d'équipements (40).

11. Turbomachine d'aéronef (10) comprenant un ensemble (20) selon l'une quelconque des revendications 1 à 10.

12. Turbomachine d'aéronef (10) selon la revendication 11, comprenant, en aval du carter intermédiaire (14), un carter de compresseur (60) et un carter de chambre de combustion (16), et dans lequel l'ensemble est dépourvu de fixation entre le support d'équipements (40) et le carter de compresseur (60) ainsi que le carter de chambre de combustion (16).

## Patentansprüche

1. Anordnung für Flugzeugturbinentriebwerk (20), umfassend eine Zwischengehäusenabe (30), einen Ausrüstungsträger (40), der eine stromaufwärts gelegene Seite (42) aufweist, die stromabwärts der Zwischengehäusenabe (30) gelegen ist, und ein Verteilergetriebe (50), das eine Kraftübertragungswelle (54) antreibt, die ausgelegt ist, um mechanische Kraft zu übertragen, die von einer Antriebswelle (17) des Turbinentriebwerks abgezogen wird, auf mindestens eine stromaufwärts gelegene Ausrüstung (46), die auf der stromaufwärts gelegenen Seite (42) des Ausrüstungsträgers (40) angebracht ist, **dadurch gekennzeichnet, dass** die die stromaufwärts gelegene Ausrüstung (46) ein Strukturelement (462) umfasst, das den Ausrüstungsträger (40) an der Zwischengehäusenabe (30) befestigt.

2. Anordnung für Flugzeugturbinentriebwerk nach Anspruch 1, wobei die stromaufwärts gelegene Ausrüstung (46) einen Funktionsteil (461) umfasst, wobei das Strukturelement (462) den Funktionsteil zumindest teilweise umgibt.

3. Anordnung für Flugzeugturbinentriebwerk nach Anspruch 1 oder 2, wobei die mindestens eine stromaufwärts gelegene Ausrüstung (46) eine von einem elektrischer Generator zur Versorgung des Flugzeugs mit elektrischer Energie, einem Wechselstromgenerator zur Versorgung elektrischer Ausrüstungen des Turbinentriebwerks mit elektrischem Strom, einem Anlasser zum Starten des Turbinentriebwerks, einer Hydraulikpumpe zur Versorgung des Flugzeugs mit hydraulischer Leistung, einer Kraftstoffpumpe oder einer Schmierpumpe ist.

4. Anordnung für Flugzeugturbinentriebwerk nach einem der Ansprüche 1 bis 3, wobei das Strukturelement (462) starr an der stromaufwärts gelegenen Seite (42) und an der Zwischengehäusenabe (30) befestigt ist.

5. Anordnung für Flugzeugturbinentriebwerk nach einem der Ansprüche 1 bis 3, wobei das Strukturelement (462) starr an der stromaufwärts gelegenen Seite (42) befestigt ist, wobei die Anordnung ferner mindestens einen stromaufwärts gelegenen Arm (70) umfasst, der das Strukturelement (462) der stromaufwärts gelegene Ausrüstung (46) mit der Zwischengehäusenabe (30) verbindet, und wobei eine starre Hülse (52) die Kraftübertragungswelle (54) umgibt und den Ausrüstungsträger starr an der Zwischengehäusenabe befestigt.

6. Anordnung für Flugzeugturbinentriebwerk nach einem der Ansprüche 1 bis 3, wobei das Strukturelement (462) starr an der stromaufwärts gelegenen Seite (42) befestigt ist, wobei die Anordnung ferner mindestens einen stromaufwärts gelegenen Arm (70) umfasst, der das Strukturelement (462) der stromaufwärts gelegene Ausrüstung (46) mit der Zwischengehäusenabe (30) verbindet, mindestens eine stromabwärts gelegenen Ausrüstung (48), die an einer stromabwärts gelegenen Seite (44) des Ausrüstungsträgers (40) angebracht ist, und mindestens einen stromabwärts gelegenen Arm (71), der ausgelegt ist, um die stromabwärts gelegenen Ausrüstung (48) mit einem Gehäuse (18) des Turbinentriebwerks zu verbinden, das stromabwärts des Ausrüstungsträgers (40) angeordnet ist.

7. Anordnung für Flugzeugturbinentriebwerk nach Anspruch 5 oder 6, wobei der mindestens eine stromaufwärts gelegene Arm (70) gelenkig an der Zwischengehäusenabe (30) und/oder am Strukturelement (462) der stromaufwärts gelegenen Ausrüstung (46) befestigt ist.

8. Anordnung für Flugzeugturbinentriebwerk nach einem der Ansprüche 1 bis 7, wobei die Befestigung des Ausrüstungsträgers (40) an der Zwischengehäusenabe (30) isostatisch ist.

9. Anordnung für Flugzeugturbinentriebwerk nach einem der Ansprüche 1 bis 8, wobei der Ausrüstungsträger (40) derart an der Zwischengehäusenabe (30) befestigt ist, dass er sich in der Gebrauchsposition überwiegend unterhalb einer Achse (X) der Zwischengehäusenabe (30) befindet.

10. Anordnung für Flugzeugturbinentriebwerk nach einem der Ansprüche 1 bis 9, umfassend mindestens zwei stromaufwärts gelegene Ausrüstungen (46), wobei die mindestens zwei stromaufwärts gelegenen Ausrüstungen (46) jeweils ein Strukturelement (462) umfassen und jeweils an zwei gegenüberliegenden Enden des Ausrüstungsträgers (40) angeordnet sind.

11. Flugzeugturbinentriebwerk (10), umfassend eine Anordnung (20) nach einem der Ansprüche 1 bis 10.

12. Flugzeugturbinentriebwerk (10) nach Anspruch 11, das stromabwärts des Zwischengehäuses (14) ein Verdichtergehäuse (60) und ein Brennkammergehäuse (16) umfasst, und wobei die Anordnung keine Befestigung zwischen dem Ausrüstungsträger (40) und dem Verdichtergehäuse (60) sowie dem Brennkammergehäuse (16) aufweist.

## Claims

1. An assembly for an aircraft turbomachine (20), comprising an intermediate casing hub (30), an equipment support (40) having an upstream face (42) located downstream of the intermediate casing hub (30), and a transfer gear box (50) driving a power transmission shaft (54) configured to transmit mechanical power, taken off an engine shaft (17) of the turbomachine, to at least one upstream equipment item (46) mounted on the upstream face (42) of the equipment support (40), **characterized in that** the upstream equipment item (46) comprises a structural element (462) attaching the equipment support (40) to the intermediate casing hub (30).

2. The assembly for an aircraft turbomachine as claimed in claim 1, wherein the upstream equipment item (46) comprises a functional part (461), the structural element (462) at least partly surrounding the functional part.

3. The assembly for an aircraft turbomachine as claimed in claim 1 or 2, wherein the at least one upstream equipment item (46) is one from among an electric generator to supply electrical power to the aircraft, an alternator to supply electrical current to electrical equipment items of the turbomachine, a starter to start the turbomachine, a hydraulic pump to provide hydraulic power to the aircraft, a fuel pump, or a lubrication pump.

4. The assembly for an aircraft turbomachine as claimed in any of claims 1 to 3, wherein the structural element (462) is rigidly attached to the upstream face (42) and to the intermediate casing hub (30).

5. The assembly for an aircraft turbomachine as claimed in any of claims 1 to 3, wherein the structural element (462) is rigidly attached to the upstream face (42), the assembly further comprising at least one upstream arm (70) connecting the structural element (462) of the upstream equipment item (46) to the intermediate casing hub (30), and wherein a rigid sheath (52) surrounds the power transmission shaft (54) and rigidly attaches the equipment support to the intermediate casing hub.

6. The assembly for an aircraft turbomachine as claimed in any of claims 1 to 3, wherein the structural element (462) is rigidly attached to the upstream face (42), the assembly further comprising at least one upstream arm (70) connecting the structural element (462) of the upstream equipment item (46) to the intermediate casing hub (30), at least one downstream equipment item (48) mounted on a downstream face (44) of the equipment support (40), and at least one downstream arm (71) configured to connect the downstream equipment item (48) to a casing (18) of the turbomachine disposed downstream of the equipment support (40).

7. The assembly for an aircraft turbomachine as claimed in claim 5 or 6, wherein the at least one upstream arm (70) is attached to the intermediate casing hub (30) and/or to the structural element (462) of the upstream equipment item (46) in an articulated manner.

8. The assembly for an aircraft turbomachine as claimed in any of claims 1 to 7, wherein the attachment of the equipment support (40) to the intermediate casing hub (30) is isostatic.

9. The assembly for an aircraft turbomachine as claimed in any of claims 1 to 8, wherein the equipment support (40) is attached to the intermediate casing hub (30) such that, in a working position, a majority of the equipment support is located below an axis (X) of the intermediate casing hub (30).

10. The assembly for an aircraft turbomachine as claimed in any of claims 1 to 9, comprising at least two upstream equipment items (46), the at least two upstream equipment items (46) each comprising a structural element (462) and being each disposed at two opposite ends of the equipment support (40).

11. An aircraft turbomachine (10) comprising an assembly (20) as claimed in any of claims 1 to 10.

12. An aircraft turbomachine (10) as claimed in claim 11, comprising, downstream of the intermediate casing (14), a compressor casing (60) and a combustion chamber casing (16), and wherein the assembly has no attachment between the equipment support (40) and the compressor casing (60) as well as the combustion chamber casing (16).
